# EUROPÄISCHE PATENTSCHRIFT

(11) **EP 1 548 278 B1**
(45) Veröffentlichungstag und Bekanntmachung des Hinweises auf die Patenterteilung: **24.06.2009**
(21) Anmeldenummer: 04030491.7
(22) Anmeldetag: 22.12.2004
(51) Int. Cl.: F03D 9/00, H02J 3/00

(54) **Windenergieanlage mit einer eigenversorgten Steuereinrichtung mit einem Wirkleistungs- und Blindleistungsregelmodul**
Wind energy plant with a self powered control device with an active power and reactive power regulation module
Installation éolienne avec un dispositif de commande autoalimenté avec un module de régulation de puissance active et puissance réactive

(30) Priorität: 22.12.2003 DE 10360462
(43) Veröffentlichungstag der Anmeldung: 29.06.2005
(73) Patentinhaber: REpower Systems AG, 22335 Hamburg (DE)
(72) Erfinder: Heinz-Hermann, Letas, Dr, 23701 Süsel (DE)
(74) Vertreter: Glawe, Delfs, Moll

(56) Entgegenhaltungen:
- WO-A1-01/73518
- US-A- 5 585 708
- US-A1- 2001 048 290
- US-A1- 2002 079 706

## Beschreibung

Die Erfindung betrifft eine Windenergieanlage mit einem Rotor, einem durch ihn angetriebenen Generator mit einem Wechselrichter zur Erzeugung elektrischer Leistung (P_{g}, Q_{g}), einer Hauptleitung, die mit dem Wechselrichter und einem Stromnetz zur Einspeisung elektrischer Leistung (Pₙ, Qₙ) in das Stromnetz verbunden ist, einer Anzapfungseinrichtung in der Hauptleitung zur Eigenversorgung (Pₑ, Qₑ) der Windenergieanlage über eine Nebenleitung und einer Steuereinrichtung mit einem Wirkleistungs- und Blindleistungsregelmodul.

Windenergieanlagen erfreuen sich in jüngerer Zeit einer zunehmenden Verbreitung als besonders umweltfreundliche und ressourcenschonende Stromerzeugungseinrichtungen. In zunehmendem Umfang dienen Sie nicht nur zur Versorgung kleiner abgeschlossenen Einheiten, sondern tragen mit steigender installierter Leistung zu einen um so größeren Anteil an der Energieversorgung. Je größer und leistungsfähiger Windenergieanlagen aber werden, um so genauer müssen sie definierte Parameter bezüglich ihrer Anschaltung an das Stromnetz einhalten. Anders als bei Atomkraftwerken, Wasserkraftwerken und Kohle- oder Erdgaskraftwerken kann aber bei Windenergieanlagen die zur Stromerzeugung dienende Primärenergie nicht kontrolliert werden, sondern ist ausgesprochen schwankend. Da seitens der Energieversorgungsunternehmen es nicht gewünscht ist, daß Strom- und Spannungsschwankungen im Netz auftreten, müssen Windenergieanlagen mit einer leistungsfähigen Steuereinrichtung versehen sein, welche auch bei sich schnell ändernden Windverhältnissen ein kontrolliertes Einspeisen elektrischer Leistung in das Netz sichergestellt. Damit soll eine ausreichende Netzverträglichkeit der Windenergieanlage erreicht werden. Insbesondere soll ein sogenannter Netz-Flicker durch Spannungs- und Leistungsschwankungen bei der Einspeisung vermieden bzw. verringert werden.

Aus offenkundiger Vorbenutzung sind Steuereinrichtungen bekannt, bei denen die vom Generator bzw. einem ihm nachgelagerten Wechselrichtersystem erzeugte elektrische Leistung bezüglich ihres Wirk- und Blindleistungsanteils erfaßt und geregelt wird. Das Dokument US 2002 079 706 offenbart eine Windenergieanlage, wobei die vom Generator erzeugten Wirk- und Blindleistung gemessen und geregelt werden. Eine Schwierigkeit erwächst hierbei jedoch daraus, daß die Windenergieanlage für ihren eigenen Bedarf elektrische Leistung benötigt (sogenannter Eigenverbrauch). Zur Einspeisung in das Netz steht nur die um diesen Eigenverbrauch verminderte Leistung zur Verfügung. Der Eigenverbrauch ist nicht konstant, sondern es ergeben sich durch Ein- und Ausschalten von Systemkomponenten der Windenergieanlagen, wie insbesondere Pitch-Systeme, Lüfter oder Azimut-Motoren, erhebliche Schwankungen. Für größere Windenergieanlagen mit Leistungen im Megawatt-Bereich sind etwa zwei bis drei Prozent der Bemessungsleistung der Windenergieanlage für den Eigenverbrauch einzuplanen, bei kleinen Anlagen liegt dieser Anteil noch höher. Die genannten Anteile können kurzzeitig, etwa beim Anlaufen größerer Hilfsantriebe, erheblich höhere Werte bis hin zum achtfachen annehmen.

In der Praxis haben sich zwei Konzepte herausgebildet, den Eigenverbrauch bei der Steuerung der Windenergieanlage zu berücksichtigen. Ein erstes Konzept zeichnet sich dadurch aus, daß der Eigenverbrauch der Windenergieanlage aus dem Stromnetz gedeckt wird. Das hat den Vorteil, daß der aus Rotor, Getriebe und Generator bestehende Triebstrang der Windenergieanlage nicht durch Schaltvorgänge des Eigenverbrauchs beeinflußt wird, so daß keine Gefahr besteht, daß der Triebstrang durch die Schaltvorgänge zu Schwingungen angeregt wird. Der Nachteil dieses Konzepts liegt darin, daß aufgrund der Abdeckung des Eigenverbrauchs aus dem Netz die netto an das Netz abgegebene Leistung nicht genau gesteuert werden kann. Insbesondere das Einschalten von elektromotorischen Antrieben führt zu Sprüngen bei der Blindleistung, die sich durch eine erhöhte Flicker-Belastung im Netz zeigen. Dies gilt insbesondere dann, wenn die Windanlage insgesamt nur eine geringe Leistung abgibt. Die Netzverträglichkeit der Windenergieanlage verschlechtert sich dadurch unter Umständen beträchtlich. Werden dabei die in den Anschlußverträgen mit den Netzbetreibern vereinbarten Grenzwerte nicht mehr eingehalten, so führt dies zu finanziellen Verlusten. Bei einem alternativen Konzept wird daher der Eigenverbrauch nicht aus dem Netz abgedeckt, sondern dazu wird die vom eigenen Generatorsystem erzeugte Leistung verwendet. Das hat den Vorteil, daß die an das Netz abgegebene Leistung sehr genau geregelt werden kann. Die Netzverträglichkeit ist damit hoch. Der Nachteil dieses Konzepts liegt aber darin, daß der Triebstrang der Windenergieanlage durch Belastungssprünge schlagartig belastet wird, wodurch Schwingungen angefacht werden können, die eine erhöhte Belastung des mechanischen Teils der Anlage bedeuten und damit verschleißfördernd sind.

Der Erfindung liegt die Aufgabe zugrunde, eine Windenergieanlage der eingangs genannten Art zu schaffen, bei der die Nachteile der aus dem Stand der Technik bekannten Konzepte vermindert sind.

Die erfindungsgemäße Lösung liegt in einer Vorrichtung und einem Verfahren gemäß den unabhängigen Ansprüchen. Vorteilhafte Weiterbildungen sind Gegenstand der abhängigen Ansprüche.

Bei einer Windenergieanlage mit einem Rotor, einem durch ihn angetriebenen Generator mit einem Wechselrichter zur Erzeugung elektrischer Leistung (P_{g}, Q_{g}), einer Hauptleitung, die mit dem Wechselrichter und einem Stromnetz zur Einspeisung elektrischer Leistung (Pₙ, Qₙ) in das Stromnetz verbunden ist, einer Anzapfungs-einrichtung an der Hauptleitung zur Eigenversorgung (Pₑ, Qₑ) der Windenergieanlage über eine Nebenleitung und einer Steuereinrichtung mit einem Wirkleistungs- und Blindleistungsregelmodul ist erfindungsgemäß vorgesehen, daß eine erste Leistungsmeßeinrichtung für die vom Generator erzeugte Wirkleistung (P_{g}) vorgesehen ist und mit einem Regelgrößenanschluß des Regelmoduls verbunden ist und eine zweite Leistungsmeßeinrichtung für die in das Stromnetz eingespeiste Blindleistung (Qₙ) vorgesehen ist, die mit einem Regelgrößenanschluß des Blindleistungsregelmoduls verbunden ist.

Nachfolgend seien zuerst einige verwendete Begriffe erläutert:

Unter elektrischer Leistung wird, sofern nichts anderes gesagt ist, Scheinleistung verstanden, die sich aus den Komponenten Wirkleistung und Blindleistung zusammensetzt.

Unter einem Stromnetz wird ein Energieversorgungsnetz verstanden, das in verzweigter Struktur für den Transport elektrischer Energie vorgesehen ist.

Unter Eigenverbrauch wird die zum Betrieb der Windenergieanlage benötigte elektrische Leistung verstanden.

Unter einer Leistungsmeßeinrichtung wird eine Einrichtung verstanden, die Spannung und Ströme an einer bestimmten Stelle mißt, um die durch diese Stelle übertragene Leistung zu ermitteln. Bei der ermittelten Leistung kann es sich je nach Einsatzzweck um Schein-, Wirk- oder Blindleistung handeln.

Die Erfindung beruht auf dem Gedanken, die zur Steuerung der Windenergieanlage erforderliche Wirkleistungsregelung und Blindleistungsregelung auf zwei verschiedene elektrische Schnittstellen aufzuteilen. Die Erfindung erreicht dies dadurch, daß sie die Wirkleistung (P_{g}) generatorseitig der Anzapfungseinrichtung für den Eigenverbrauch bestimmt und die Blindleistung (Qₙ) netzseitig der Auszapfungseinrichtung. Das hat den Effekt, daß die Wirkleistung geregelt wird ohne Berücksichtigung des Eigenverbrauchs, d. h. die für den Betrieb erforderliche Wirkleistung wird aus dem Netz bezogen. Dies hat den Vorteil, daß der den Rotor und Generator umfassende mechanische Triebstrang davor geschützt ist, durch sprungartige Änderungen des Eigenverbrauchs zu Schwingungen angeregt zu werden. Die tatsächlich an das Netz abgegebene Wirkleistung ist dadurch zwar nicht genau geregelt, jedoch ist diese im Teillastbereich der Windenergieanlage ohnehin von der sich ändernden Windstärke abhängig und damit schwankend, so daß insoweit keine Verschlechterung gegeben ist. Andererseits sieht die Erfindung vor, die Blindleistung (Qₙ) vom Generator gesehen hinter der Anzapfung zu bestimmen und zu regeln. Das bedeutet, daß bei der Regelung der Eigenverbrauch mit berücksichtigt wird. Die Steuereinrichtung kann so die in das Netz abgegebene Blindleistung genau regeln. Die Regelung kann hierbei absolut bezogen auf die Blindleistung oder relativ bezogen auf den Leistungsfaktor cos ϕ wirken. Es ergibt sich damit die Möglichkeit, Blindleistungssprünge des Eigenverbrauchs, bspw. durch das Einschalten von Azimut-Motoren, auszuregeln und damit unerwünschten Netz-Flicker zu vermindern. Zwar wird dadurch der Triebstrang dynamischen Änderungen der Blindleistungen ausgesetzt, jedoch macht sich die Erfindung die Erkenntnis zunutze, daß Änderungen der Blindleistungen gerade nicht zu Drehmomentänderungen führen (denn diese sind mit Wirkleistungsänderungen verknüpft). Die Erfindung hat weiter den Effekt, daß die Stabilität der Spannung, mit der elektrische Leistung in das Netz eingespeist wird, verbessert wird, wodurch sich letztlich auch die Qualität der Wirkleistungseinspeisung verbessert, denn eine sinkende Spannung hätte gemäß der bekannten Beziehung P = U x I auch ein Sinken der Wirkleistung zur Folge, sofern das nicht durch eine entsprechende Stromerhöhung ausgeglichen würde.

Grundsätzlich ist es für die Funktion der Erfindung ohne Belang, auf welche Weise die Leistungsmessung durchgeführt wird. In der Praxis haben sich jedoch einige Anordnungen besonders bewährt, die nachfolgend kurz erläutert werden. Bei einer zweckmäßigen Ausführungsform ist sowohl die erste Leistungsmeßeinrichtung zur Erfassung der generatorseitigen Wirkleistung (P_{g}) wie auch die zweite Leistungsmeßeinrichtung zur Erfassung der in das Stromnetz eingespeisten Blindleistung (Qₙ) in der Hauptleitung ausgebildet. Dies erlaubt eine direkte Messung. Das hat den Vorteil der konzeptionellen Sauberkeit und Einfachheit. Dem steht als Nachteil jedoch gegenüber, daß die zur Leistungsmessung erforderlichen Komponenten, insbesondere Stromwandler, für entsprechend hohe Leistungen bemessen sein müssen. Sie erreichen damit beträchtliche Abmessungen und sind in der Anschaffung teuer. Alternativ kann auch vorgesehen sein, nur eine Leistungsmeßeinrichtung in der Hauptleitung anzuordnen und eine andere an der Nebenleitung anzuordnen. Dies hat den Vorteil, daß nur eine Leistungsmeßeinrichtung so groß bemessen sein muß, um eine Messung in der Hauptleitung zu ermöglichen, während die andere kleiner bemessen sein kann, da sie nur in der einen Bruchteil der Leistung führenden Nebenleitung angeordnet ist. Hierbei stehen zwei Möglichkeiten zur Verfügung. Bei einer bewährten Ausführungsform ist die erste Leistungsmeßeinrichtung zur Erfassung der generatorseitigen Wirkleistung in der Hauptleitung und die zweite Leistungsmeßeinrichtung zur Erfassung der Blindleistung in der Nebenleitung angeordnet. Die zur Steuerung benötigte in das Netz gegebene Blindleistung wird dann bestimmt aus der generatorseitig erzeugten Blindleistung abzüglich der für den Eigenverbrauch abgenommenen Blindleistung. Oder es wird die in das Netz abgegebene Blindleistung direkt gemessen, und die vom Generator erzeugte Wirkleistung aus der ins Netz eingespeisten Blindleistung zuzüglich der für den Eigenverbrauch abgezweigten Wirkleistung berechnet. Allen Varianten ist es gemeinsam, daß der Wirkleistungsanteil des Eigenverbrauchs netzseitig nicht ausgeregelt wird, sondern aus dem Netz gedeckt wird.

Jedoch soll es nicht ausgeschlossen sein, daß eine zusätzliche Regeleinrichtung zur langfristigen Ausregelung der Wirkleistung des Eigenverbrauchs vorgesehen ist. Eine Regelung mit großer Zeitkonstante hat den Vorzug, daß sie schädliche Schwingungen des Triebstrangs vermeidet, während eine Regelung mit kleiner Zeitkonstante durchaus dazu führen könnte, solche Schwingungen anzuregen. Die zusätzliche Regeleinrichtung ist zweckmäßigerweise in die Steuereinrichtung integriert. Zur Gewinnung der Regelgröße kann vorgesehen sein, entweder eine eigene Leistungsmeßeinrichtung für die Wirkleistung des Eigenverbrauchs vorzusehen, oder es kann der Wert aus den Meßwerten der ersten bzw. zweiten Leistungsmeßeinrichtung ermittelt werden. Die Regeleinrichtung zur langfristigen Ausregelung der Wirkleistung enthält zweckmäßigerweise einen integralwirkenden Anteil (I-Regler). Dadurch wird erreicht, dass der langfristige Mittelwert der Wirkleistung stationär genau auf einen gewünschten Leistungssollwert ausgeregelt wird. Weiterhin kann die Regeleinrichtung Tiefpassfilter umfassen. Bei dem Tiefpaßfilter kann es sich um einen diskret aufgebauten Filter, wie ein RC-Glied handeln, oder er ist vorzugsweise als digitaler Filter realisiert, der als Moving Average (MA) oder Rampenfilter ausgeführt ist. Durch die zusätzliche Regelung des Wirkleistungsanteils kann erreicht werden, daß eine stationäre Genauigkeit bezüglich der in das Netz abgegebenen Wirkleistung erreicht wird, ohne daß dabei die Gefahr besteht, durch sprungartige Änderungen Schwingungen des Triebstrangs anzufachen. Zweckmäßigerweise ist die Zusatzregeleinrichtung über einen Grenzlastschalter zu- und abschaltbar. Unter einem Grenzlastschalter wird eine Einrichtung verstanden, die einschaltet, wenn die Windenergieanlage mit ihrer Nennleistung oder mit einer von außen vorgebbaren reduzierten Schwellleistung betrieben wird, und öffnet, wenn die von der Windenergieanlage abgegebene Leistung darunter liegt. Dazu ist der Grenzlastschalter vorzugsweise mit einem Steuereingang zur Einstellung der Grenzlast versehen. Dem liegt die Erkenntnis zugrunde, daß es der durch die Zusatzregeleinrichtung bewirkten Funktionalität dann nicht unbedingt bedarf, wenn die Windenergieanlage im Teillastbetrieb, also unterhalb ihrer Nennleistung, betrieben wird. Dank der Möglichkeit der Vorgabe einer reduzierten Schwellleistung kann auch von außen, z. B. durch den Betreiber der Anlage, oder mittels eines übergeordneten Regelsystems auf die Zusatzregeleinrichtung eingewirkt werden. Häufig wird es so sein, daß ein Signal über den Betrieb der Windenergieanlage bei Nennlast bereits in der Anlagensteuerung vorhanden ist. Es kann aber auch vorgesehen sein, daß mittels eines Grenzwertschalters ein entsprechender Nennlastdetektor ausgebildet ist.

Bei einer zweckmäßigen Ausführungsform ist ein Transformator zum Erzeugen einer höheren Abgabespannung vorgesehen, wobei die zweite Leistungsmeßeinrichtung an der Hochspannungsseite dieses Transformators angeordnet ist. Bei der höheren Abgabespannung handelt es sich vorzugsweise um eine Mittelspannung oder um eine Hochspannung, wie sie in Energieübertragungsnetzen üblich sind. Der Transformator ist zweckmäßigerweise als Dreiwicklungstransformator ausgeführt. Eine derartige Anordnung ermöglicht eine einfache Leistungsmessung auch bei doppelt gespeisten Generatorsystemen. Es versteht sich, daß auch mehr als drei Wicklungen zur Aufteilung der Leistung auf mehrere parallele Systeme vorgesehen sein können. Der Begriff "Dreiwicklungstransformator" umfaßt vorliegend auch solche Transformatoren mit mehr als drei Wicklungen. Ferner soll es nicht ausgeschlossen sein, daß der Generator als konventioneller Synchrongenerator oder als Gleichstromgenerator ausgeführt ist. Der Generator kann außerdem fremd- oder eigenerregt (z. B. permanenterregt) sein oder eine kombinierte Erregung aufweisen.

Vorzugsweise ist zwischen Rotor und Generator ein Getriebe angeordnet. Ein Getriebe bietet den Vorteil, Rotor und Generator auf unterschiedliche Nenndrehzahl auslegen zu können, um so beide in ihren jeweiligen optimalen Betriebspunkten zu führen. Ein Getriebe bringt jedoch stets den Nachteil mit sich, den Triebstrang um eine zusätzliche mechanische Komponente zu ergänzen, die recht empfindlich gegenüber Schwingungen ist. Dank der durch die erfindungsgemäße Gestaltung erreichten Unterdrückung von Schwingungen des Triebstrangs auch bei Sprüngen des Eigenverbrauchs ist es aber ohne Bedenken hinsichtlich der Zuverlässigkeit der Anlage ermöglicht, ein Getriebe vorzusehen.

Die Erfindung bezieht sich weiter auf ein Verfahren zum Betrieb einer Windenergieanlage, die einen Rotor, ein durch ihn angetriebenen Generator und einen Wechselrichter zur Erzeugung elektrischer Leistung aufweist, mit Einspeisen der elektrischen Leistung in ein Stromnetz über eine Hauptleitung und Anzapfen der Hauptleitung zum Versorgen der Windenergieanlage mit Eigenbedarfsleistung über eine Nebenleitung, wobei die Wirk- und Blindleistung von einer Steuereinrichtung geregelt werden, und erfindungsgemäß vorgesehen ist, daß die von dem Generator abgegebene Wirkleistung bestimmt und als Regelgröße für das Regeln der Wirkleistung verwendet wird und die an das Netz abgegebene Blindleistung bestimmt und als Regelgröße für das Regeln der Blindleistung verwendet wird.

Bezüglich der weiteren Erläuterung des Verfahrens wird auf vorstehende Ausführungen zu der Vorrichtung verwiesen, die sinngemäß auch für das erfindungsgemäße Verfahren gelten.

Die Erfindung wird nachfolgend unter Bezugnahme auf die beigefügte Zeichnung erläutert, in der vorteilhafte Ausführungsbeispiele dargestellt sind.

### Es zeigen:

- Fig. 1: eine schematische Ansicht eines ersten Ausführungsbeispiels einer erfindungsgemäßen Windenergieanlage;
- Fig. 2: eine schematische Ansicht eines zweiten Ausführungsbeispiels;
- Fig. 3: eine schematische Ansicht eines dritten Ausführungsbeispiels;
- Fig. 4: eine schematische Ansicht eines vierten Ausführungsbeispiels;
- Fig. 5: ein Schaltbild einer Leistungsmeßeinrichtung; und
- Fig. 6: ein Schaltbild einer alternativen Leistungsmeßeinrichtung.

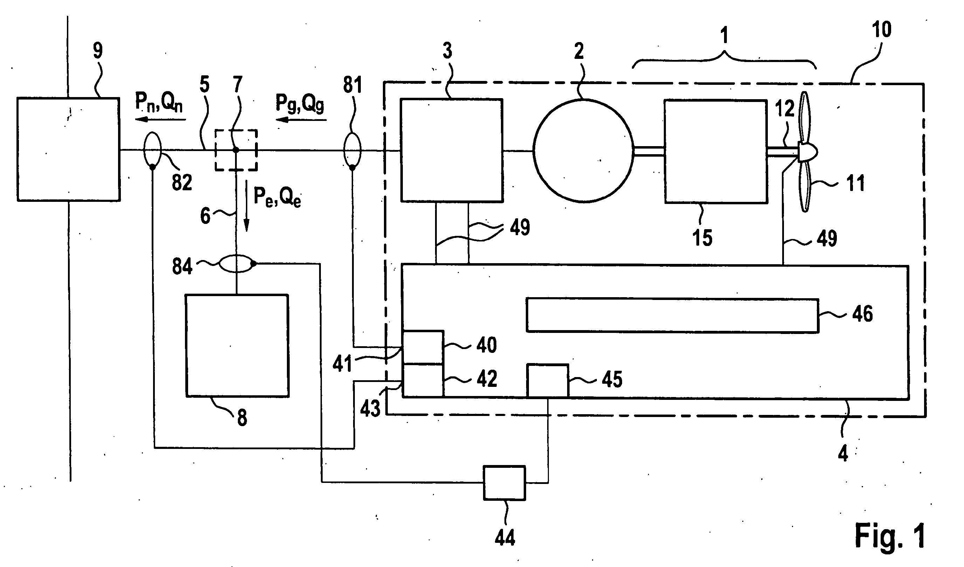

Die erfindungsgemäßen Windenergieanlage gemäß dem in Fig. 1 dargestellten Ausführungsbeispiel umfaßt einen Triebstrang 1 mit einem Rotor 11, einer Antriebswelle 12 und einem Getriebe 15, einen Generator 2 mit einem Wechselrichter 3 und eine Steuereinrichtung 4. Der Aufbau der Windenergieanlage ist insoweit konventionell. Die in Fig. 1 in einem gestrichelten Kasten 10 angeordneten Komponenten sind üblicherweise in einem Maschinengehäuse auf einem Turm der Windenergieanlage angeordnet. An einer Stirnseite des Maschinengehäuses ist der Rotor 11 drehbeweglich gelagert. Er weist mehrere an einer Mittelnabe angeordnete Rotorblätter auf. Zur Anpassung an unterschiedliche Windgeschwindigkeiten sind die Blätter des Rotors bezüglich des Anstellwinkels veränderbar. Der Rotor 11 treibt über die Antriebswelle 12 und das Getriebe 15 den als Asynchronmaschine ausgeführten Generator 2. Dieser wandelt die von dem Rotor 11 gelieferte mechanische Leistung in elektrische Leistung um, die als Drehstrom dem Wechselrichter 3 zugeführt wird. Aus Gründen einer übersichtlicheren Darstellung ist in Fig. 1 der von dem Wechselrichter 3 erzeugte Drehstrom durch eine einzige Phase symbolisiert dargestellt. Der Wechselrichter 3 kann einstufig oder mehrstufig ausgebildet sein. Als Bauteil des Wechselrichters 3 werden insbesondere Dioden, Tyristoren, IGBTs, IGSTs oder GTOs verwendet. Der Betrieb des Wechselrichters 3 und gegebenenfalls die Blattverstellung des Rotors 11 sind gesteuert über die Steuereinheit 4 und (nur teilweise dargestellt) Steuerleitungen 49.

Am Ausgang des Wechselrichters 3 bereitgestellte Leistung wird als Generatorleistung (P_{g}, Q_{g}) bezeichnet. Sie wird über eine Hauptleitung 5 an ein Stromnetz 9 übertragen und dort als Netzleistung (Pₙ, Qₙ) eingespeist. Bei dem Stromnetz 9 handelt es sich vorzugsweise um ein Mittelspannungsoder um ein Hochspannungsnetz. Entlang der Hauptleitung 5 ist eine Abzweigeinrichtung 7 angordnet. Sie dient dazu, eine Nebenleitung 6 elektrisch mit der Hauptleitung 5 zu verbinden, um so über die Nebenleitung 6 die Windenergieanlage mit der für ihren Betrieb erforderlichen elektrischen Leistung (Eigenbedarf) zu versorgen. Die für den Eigenbedarf verwendete Leistung wird mit ihrem Wirkleistungsanteil als Pₑ und mit ihrem Blindleistungsanteil als Qₑ bezeichnet. Die Nebenleitung 6 endet an einem Netzteil 48 der Windenergieanlage, welches die einzelnen Komponenten der Windenergieanlage über (nicht dargestellte) Versorgungsleitungen mit elektrischer Energie versorgt.

Die Steuereinrichtung 4 umfaßt Module für einzelne Steueraufgaben. Dargestellt sind ein Wirkleistungssteuermodul 40, ein Blindleistungssteuermodul 42. Die Steuereinrichtung 4 ist für autarken Betrieb ausgelegt, jedoch kann sie über ein Interface (nicht dargestellt) mit einem Datenübertragungsnetz verbunden sein, um so eine Fernwartung bzw. Fernsteuerung zu ermöglichen. Das Wirkleistungsmodul 40 ist dazu ausgebildet, nach Maßgabe eines Betriebsführungsmoduls 46 den Generator 2 sowie den Rotor 11 so anzusteuern, daß möglichst viel Wirkleistung erzeugt wird. Das Blindleistungsregelmodul 42 ist dazu ausgebildet, nach Maßgabe des Betriebsführungsmoduls 46 soviel Blindleistung zur Verfügung zu stellen, wie es für die aktuelle Situation im Stromnetz 9 geboten ist.

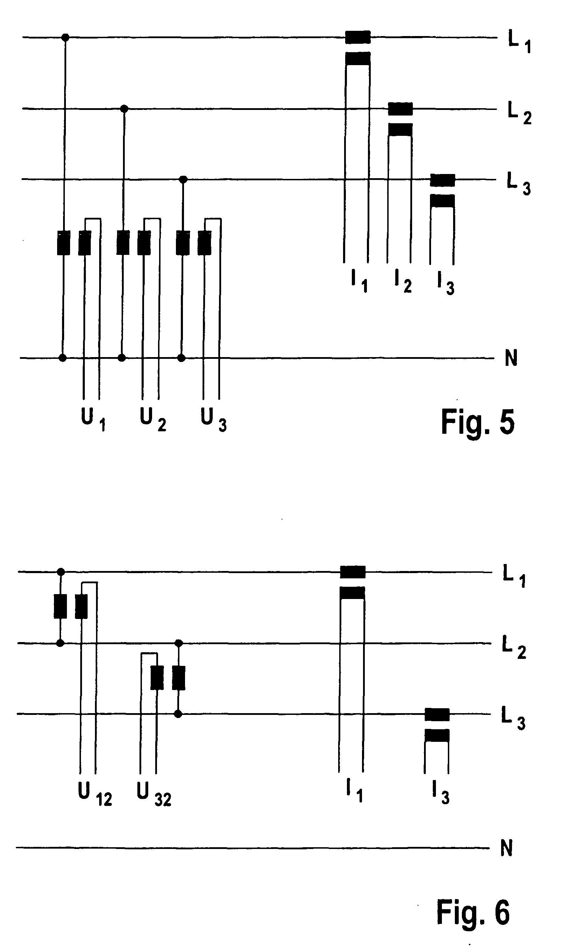

Das Wirkleistungsregelmodul 40 ist so ausgebildet, daß der Wirkleistungsanteil P_{g} der vom Generator 2 mit dem Wechselrichter 3 erzeugten elektrischen Leistung geregelt wird. Regelgröße ist also die Wirkleistung P_{g}. Zur Zurückführung der tatsächlich von dem Wechselrichter 3 abgegebenen Wirkleistung zum Wirkleistungsregelmodul 40 ist eine erste Leistungsmeßeinrichtung 81 vorgesehen. Die Leistungsmeßeinrichtung ist dazu ausgebildet, die vom Wechselrichter 3 bereitgestellte Wirkleistung P_{g} zu erfassen. Der Aufbau einer solchen an sich bekannten Leistungsmeßeinrichtung 81 ist in Fig. 5 dargestellt. Sie umfaßt für jede der drei Phasen L₁, L₂, L₃ des Drehstroms eine Strommeßeinrichtung zum Ermitteln der Strangströme I₁, I₂, I₃ und drei zwischen den Phasen L₁, L₂, L₃ und dem Nulleiter N angeordneten Übertragungseinrichtungen zum Messen der Spannungen U₁, U₂ und U₃. Aus diesen Meßwerten kann in bekannter Weise die Scheinleistung und die Wirkleistung bestimmt werden.

Eine zweite Leistungsmeßeinrichtung 82 ist netzseitig der Anzapfungseinrichtung 7 vorgesehen. Sie ist entsprechend wie die erste Leistungsmeßeinrichtung 81 gestaltet, aber mit dem Blindleistungsregelmodul 42 verbunden. Sie dient dazu, die in das Netz eingespeiste Blindleistung Qₙ zu bestimmen.

Die durch die Steuereinrichtung 4 mit Hilfe des Wirkleistungsregelmoduls 40 und des Blindleistungsmoduls 42 bewirkte Steuerung der Windenergieanlage funktioniert wie folgt: Für das Wirkleistungsregelmodul 40 wird die vom Generator 2 und dem Wechselrichter 3 abgegebene Wirkleistung P_{G}, die generatorseitig der Anzapfungseinrichtung 7 ermittelt wird, herangezogen. Demgegenüber wird für das Blindleistungsregelmodul 42 die an das Netz gegebene Blindleistung Qₙ herangezogen, die netzseitig der Anzapfungseinrichtung 7 ermittelt wird. Für die Regelung wird damit erfindungsgemäß der Eigenverbrauch Pₑ, Qₑ der Windenergieanlage bezüglich der Wirkleistung nicht berücksichtigt, bezüglich der Regelung der Blindleistung hingegen schon. Diese Aufteilung der Regelung der Wirk- und Blindleistung hat den Effekt, daß der Wirkleistungseigenverbrauch Pₑ bei der Regelung der Wirkleistung außer Betracht bleibt, da dieser aus dem Stromnetz 9 entnommen wird. Änderungen des Eigenbedarfs an Wirkleistung bleiben ohne Auswirkung auf den Generator und den gesamten Triebstrang 1 der Windenergieanlage. Damit wird der Gefahr entgegengewirkt, daß durch sprungartige Änderungen Schwingungen des Triebstrangs 1 verursacht werden, die zu übermäßigen Verschleiß und Beschädigung führen können. Die Regelung der Blindleistung Qₙ netzseitig der Anzapfungseinrichtung 7, also unter Berücksichtigung des Blindleistungseigenverbrauchs Qₑ hingegen hat den Vorteil, daß die in das Stromnetz 9 abgegebene Blindleistung sehr genau kontrolliert werden kann. Auf diese Weise wird erreicht, daß die Leistung mit dem gewünschten Leistungsfaktor (cos ϕ) abgegeben wird. Ist das Blindleistungsmodul 42 für eine hinreichend schnelle Regelung ausgelegt, so können auch durch Einschaltvorgänge induktiver Lasten der Windenergieanlage verursachte Stromstöße weitgehend ausgeregelt werden, so daß Netzflicker dadurch verringert wird. Die Gefahr des Entstehens unerwünschter Schwingungen im Triebstrang besteht dabei nicht, da es bei Blindleistungssprüngen - anders als bei Wirkleistungssprüngen - im Prinzip nicht zu Drehmomentstößen und damit nicht zum Entstehen schädlicher Schwingungen kommen kann.

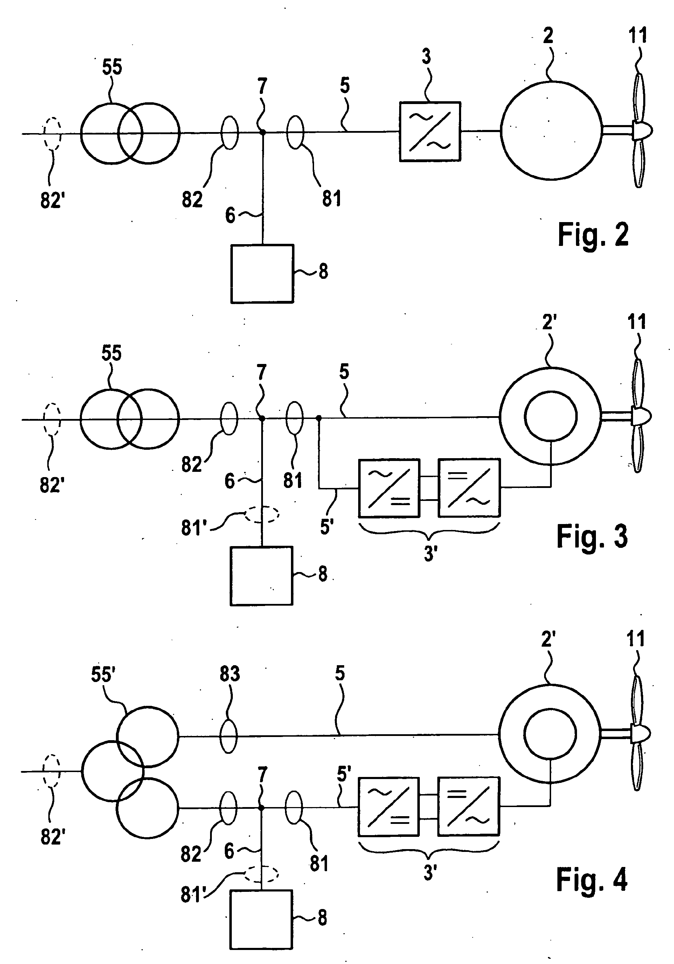

Alternative Ausführungsbeispiele sind in den Fig. 2 bis 4 dargestellt. In dem in Fig. 2 dargestellten zweiten Ausführungsbeispiel ist ein Mittelspannungstransformator 55 zwischen der Anzapfungseinrichtung 7 und dem Stromnetz 9 angeordnet. Die Leistungsmeßeinrichtungen 81, 82 können wie bei dem ersten Ausführungsbeispiel beiderseits der Anzapfungseinrichtung 7 angeordnet sein. Es ist aber auch möglich, die zweite Leistungsmeßeinrichtung 82' auf der Sekundärseite des Transformators 55 anzuordnen. Dies hat den Vorteil, daß die zu messenden Ströme entsprechend dem Übersetzungsverhältnis des Transformators 55 verringert sind. Die Leistungsmeßeinrichtung 82' kann dadurch einfacher ausgeführt sein.

Bei dem in Fig. 3 dargestellten zweiten Ausführungsbeispiel ist die Anwendung der Erfindung bei einem doppelt gespeisten Generator 2' dargestellt. Der Wechselrichter 3 ist bei diesem Ausführungsbeispiel ersetzt durch ein Wechselrichtersatz 3' mit einem Zwischenkreis, der an einer Zusatzleitung 5' angeschlossen ist. Die Anordnung der ersten und zweiten Leistungsmeßeinrichtung 81, 82 kann wie bei dem ersten Ausführungsbeispiel beidseitig der Anzapfungseinrichtung 7 erfolgen (siehe ausgezogene Linien). Es ist aber auch möglich, die zweite Leistungsmeßeinrichtung 82' netzseitig des Transformators anzuordnen (gestrichelt dargestellt). Ferner kann die erste Leistungsmeßeinrichtung 81' (gestrichelt dargestellt) an der Nebenleitung 6 angeordnet sein. Dies bietet den Vorzug, daß die Leistungsmessung nicht in der Hauptleitung 5 mit ihren hohen Strömen vorgenommen zu werden braucht, sondern an der wesentlich geringere Ströme führenden Nebenleitung 6. Die Leistungsmeßeinrichtung 81' kann damit wesentlich weniger aufwendig ausgeführt sein.

Das in Fig. 4 dargestellte vierte Ausführungsbeispiel ist grundsätzlich ähnlich zu dem in Fig. 3 dargestellten dritten Ausführungsbeispiel, jedoch ist hier anstelle eines einfachen Transformators 55 ein sogenannter Dreiwinklungstransformator 55' eingesetzt. Die Hauptleitung 5 und die Zusatzleitung 5' sind mit einer ersten bzw. zweiten Primärwicklung verbunden. Das Stromnetz ist mit der Sekundärwicklung verbunden. Die zu dem Wechselrichtersatz 3' führende Zusatzleitung 5' ist an eine zweite Primärwicklung angeschlossen. Ferner ist an der Zusatzleitung 5' die Anzapfungseinrichtung 7 angeordnet. Es sind insgesamt drei Leistungsmeßeinrichtungen vorgesehen, die erste Leistungsmeßeinrichtung 81 befindet sich an der Leitung 5' generatorseitig der Anzapfungseinrichtung 7, die zweite Leistungsmeßeinrichtung 82 ist netzseitig der Anzapfungseinrichtung 7 zwischen dieser und der zweiten Primärwicklung angeordnet und die dritte Leistungsmeßeinrichtung 83 ist in der Hauptleitung 5 vor der ersten Primärwicklung angeordnet. Durch Addition der Signale der zweiten und dritten Leistungsmeßeinrichtung 82, 83 erhält man die in das Stromnetz 9 abgegebene Leistung Pₙ, Qₙ. Durch Addition der Signale der ersten und dritten Leistungsmeßeinrichtung 81, 83 erhält man die von dem Generator erzeugte Leistung P_{g}, Q_{g}. Um den Aufwand einer dritten Leistungsmeßeinrichtung 83 zu vermeiden, kann die zweite Leistungsmeßeinrichtung sekundärseitig des Transformators als Leistungsmeßeinrichtung 82' angeordnet sein. Der Aufwand kann weiter dadurch reduziert werden, daß die erste Leistungsmeßeinrichtung 81' nicht im Bereich der Leitung 5', sondern an der Nebenleitung 6 angeordnet ist. Wie bereits vorstehend beschrieben wurde, fließt durch die Nebenleitung 6 ein wesentlich geringerer Strom, so daß die Leistungsmeßeinrichtung entsprechend kleiner dimensioniert sein kann.

Zur Verbesserung der stationären Genauigkeit der Leistungsabgabe in das Stromnetz ist vorzugsweise eine Zusatzregelung des Wirkleistungsanteils des Eigenverbrauchs (Pₑ) vorgesehen. Ein Beispiel wird anhand von Fig. 1 erläutert. Eine vierte Leistungsmeßeinrichtung 84 ist an der Nebenleitung 6 angeordnet und verbunden mit einem Zusatzregelmodul 45. Um den Triebstrang vor unerwünschten Schwingungen aufgrund von durch Einschaltströmstößen verursachten Drehmomentschwankungen zu schützen, ist das Zusatzregelmodul 45 so ausgelegt, daß es eine hohe Zeitkonstante aufweist. Zweckmäßigerweise erfolgt dies durch Vorsehen eines Tiefpaßfilters 44, mittels dem das Meßsignal der vierten Leistungsmeßeinrichtung 84 gefiltert wird. Anstelle eines Tiefpaß kann auch ein Rampenfilter oder ein Moving-Average-Filter vorgesehen sein. Durch diese Zusatzregelung wird erreicht, daß die stationäre Genauigkeit bezüglich der an das Netz abgegebenen Wirkleistung Pₙ erhöht wird, ohne daß die Gefahr des Anfachens von Schwingungen im Triebstrang auch bei Einschaltströmstößen der eigenverbrauchten Wirkleistung Pₑ besteht. Selbstverständlich kann die Zusatzregelung auch bei anderen als der in Fig. 1 dargestellten Ausführungsform vorgesehen sein. Bei Ausführungsformen wie in Fig. 3 und 4 dargestellt mit einer ohnehin an der Nebenleitung 6 vorgesehenen Leistungsmeßeinrichtung 81' kann die vierte Leistungsmeßeinrichtung 84 mit dieser kombiniert sein, so daß der zusätzliche Aufwand minimiert ist.

Leistungsmeßeinrichtungen 81 bis 84 können wie in Fig. 5 dargestellt sein, sie können aber auch gemäß Fig. 6 ausgeführt sein. Letzere Ausführung bietet den Vorteil eines verringerten schaltungstechnischen Aufwands. Anstelle von drei Strangströmen werden nur die beiden Strangströme I₁ und I₃ gemessen. Anstelle der drei zum Nulleiter gemessene Spannungen werden nur die beiden Strangspannungen U₁₂ und U₃₂ gemessen. Gemäß der an sich bekannten Aronschaltung läßt sich aus diesen Meßwerten die komplexe Leistung berechnen.

## Patentansprüche

1. Windenergieanlage mit einem Rotor (11), ein durch ihn angetriebenen Generator (2) mit einem Wechselrichter (3) zur Erzeugung elektrischer Leistung (P_{g}, Q_{g}) einer Hauptleitung (5) die mit dem Wechselrichter (3) und einem Stromnetz (9) zur Einspeisung elektrischer Leistung (Pₙ, Qₙ) in das Stromnetz (9) verbunden ist, einer Anzapfungseinrichtung (7) an der Hauptleitung (5) für den Eigenverbrauch (Pₑ, Qₑ) der Windenergieanlage über eine Nebenleitung (6), wobei der Eigenverbrauch die zum Betrieb der Windenergieanlage benötigte elektrische Leistung ist, und einer Steuereinrichtung (4) mit einem Wirkleistungs- und Blindleistungsregelmodul (40, 42),
**dadurch gekennzeichnet, daß**
eine erste Leistungsmeßeinrichtung (81) für die vom Generator (2) erzeugte Wirkleistung (P_{g}) vorgesehen und mit einem Regelgrößenanschluß (41) des Wirkleistungsregelmoduls (40) verbunden ist, wobei das Wirkleistungsregelmodul (40) die vom Generator (2) erzeugte Wirkleistung (P_{g}) regelt, und
eine zweite Leistungsmeßeinrichtung (82) für die in das Stromnetz (9) eingespeiste Blindleistung (Qₙ) vorgesehen und mit einem Regelgrößenanschluß (43) des Blindleistungsregelmoduls (42) verbunden ist, wobei das Blindleistungsregelmodul (42) die in das Stromnetz eingespeiste Blindleistung (Qₙ) regelt.

2. Windenergieanlage nach Anspruch 1,
**dadurch gekennzeichnet, daß**
die erste und zweite Leistungsmeßeinrichtung (81, 82) zur Erfassung der generator- und netzseitigen Leistung in der Hauptleitung (5) ausgebildet sind.

3. Windenergieanlage nach Anspruch 1,
**dadurch gekennzeichnet, daß**
die erste Leistungsmeßeinrichtung (81) zur Erfassung der generatorseitigen Wirkleistung (P_{g}) in der Hauptleitung (5) und die zweite Leistungsmeßeinrichtung (82') zur Erfassung der Blindleistung (Qₑ) der Eigenversorgung in der Nebenleitung (6) angeordnet ist.

4. Windenergieanlage nach Anspruch 1,
**dadurch gekennzeichnet, daß**
die erste Leistungsmeßeinrichtung (81') zur Erfassung der Wirkleistung (Pₑ) der Eigenversorgung in der Nebenleitung (6) und die zweite Leistungsmeßeinrichtung (82) zur Erfassung der netzseitigen Blindleistung (Qₙ) in der Hauptleitung (5) angeordnet ist.

5. Windenergieanlage nach einem der vorhergehenden Ansprüche,
**dadurch gekennzeichnet, daß**
die zweite Leistungsmeßeinrichtung (82') an der Hochspannungsseite eines zwischen der Anzapfungseinrichtung (7) und dem Stromnetz (9) angeordneten Transformators (55) zum Erzeugen einer höheren Abgabespannung angeordnet ist.

6. Windenergieanlage nach Anspruch 5,
**dadurch gekennzeichnet, daß**
die Abgabespannung eine Mittelspannung ist.

7. Windenergieanlage nach Anspruch 5,
**dadurch gekennzeichnet, daß**
die Abgabespannung eine Hochspannung ist.

8. Windenergieanlage nach einem der Ansprüche 5 bis 7,
**dadurch gekennzeichnet, daß**
als Transformator (55') ein Dreiwicklungstransformator vorgesehen ist.

9. Windenergieanlage nach Anspruch 8,
**dadurch gekennzeichnet, daß**
eine dritte Leistungmeßeinrichtung (83) vorgesehen ist, so daß an beiden Primärwicklungen des Dreiwicklungstransformators je eine Leistungsmeßeinrichtung angeordnet ist.

10. Windenergieanlage nach einem der vorhergehenden Ansprüche,
**dadurch gekennzeichnet, daß**
der Generator (2) als Synchrongenerator ausgeführt ist.

11. Windenergieanlage nach Anspruch 10,
**dadurch gekennzeichnet, daß**
der Synchrongenerator eine oder mehrere Erregerwicklungen und/oder eine permanente Erregung aufweist.

12. Windenergieanlage nach einem der vorhergehenden Ansprüche,
**dadurch gekennzeichnet, daß**
der Wechselrichter (3) und der Generator (2) doppelt gespeist ausgeführt sind.

13. Windenergieanlage nach einem der Ansprüche 1 bis 9,
**dadurch gekennzeichnet, daß**
der Generator (2) ein Gleichstromgenerator ist.

14. Windenergieanlage nach einem der vorhergehenden Ansprüche,
**dadurch gekennzeichnet, daß**
zwischen Rotor (11) und Generator (2) ein Getriebe (15) angeordnet ist.

15. Windenergieanlage nach einem der vorhergehenden Ansprüche,
**dadurch gekennzeichnet, daß**
eine Zusatzregeleinrichtung (45) vorgesehen ist, an die als Regelgröße das gemessene Signal der Wirkleistung des Eigenverbrauchs (Pₑ) über ein tiefpaßartiges Filter (44) angelegt ist und das von ihr ausgegebene Korrektursignal an das Wirkleistungsregelmodul (40) zugeführt ist.

16. Windenergieanlage nach Anspruch 15,
**dadurch gekennzeichnet, daß**
die Zusatzregeleinrichtung über einen Grenzlastschalter zu- und abschaltbar ist, wobei der Grenzlastschalter schließt, wenn die Windenergieanlage mit ihrer Nennleistung oder mit einer von außen vorgebbaren reduzierten Schwellleistung betrieben wird, und öffnet, wenn die von der Windenergieanlage abgegebene Leistung darunter liegt.

17. Windenergieanlage nach Anspruch 16,
**dadurch gekennzeichnet, daß**
der Grenzlastschalter einen Steuereingang zur Einstellung der Schwellleistung aufweist.

18. Verfahren zum Betrieb einer Windenergieanlage, die einen Rotor (11), ein durch ihn angetriebenen Generator (2) und einem Wechselrichter (3) zur Erzeugung elektrischer Leistung aufweist, mit Einspeisen der elektrischen Leistung in ein Stromnetz (9) über eine Hauptleitung (5) und Anzapfen (7) der Hauptleitung (5) zum Versorgen der Windenergieanlage für den Eigenverbrauch (Pₑ, Qₑ) über eine Nebenleitung (6), wobei der Eigenverbrauch (Pₑ, Qₑ) die zum Betrieb der Windenergieanlage benötigte elektrische Leistung ist, und wobei die Wirk- und Blindleistung von einer Steuereinrichtung (4) mit Wirk- und Blindleistungsmodul (40, 42) geregelt werden,
**gekennzeichnet dadurch, daß**
die von dem Generator (2) abgegebene Wirkleistung (P_{g}) bestimmt und als Regelgröße für das Wirkleistungsregelmodul (40) verwendet wird, wobei das Wirkleistungsregelmodul (40) die vom Generator (2) erzeugte Wirkleistung (P_{g}) regelt, und
die an das Netz (9) abgebebene Blindleistung (Qₙ) bestimmt und als Regelgröße für das Blindleistungsregelmodul (42) verwendet wird, wobei das Blindleistungsregelmodul (42) die in das Stromnetz (9) eingespeiste Blindleistung (Qn) regelt.

19. Verfahren nach Anspruch 18,
**gekennzeichnet durch**,
Bestimmen der vom Generator (2) abgegebenen Wirkleistung (P_{g}) **durch** Leistungsmessung (81) generatorseitig der Anzapfung (7).

20. Verfahren nach Anspruch 18,
**gekennzeichnet durch**
Bestimmen der vom Generator (2) abgegebenen Wirkleistung (P_{g}) **durch** Leistungsmessung der an das Stromnetz (9) abgegebenen Leistung (Pₙ, Qₙ) sowie des Eigenverbrauchs (Pₑ, Qₑ) und Berechnen deren Differenz.

21. Verfahren nach Anspruch 19 oder 20,
**gekennzeichnet durch**
Bestimmen der an das Stromnetz (9) abgegebenen Blindleistung (Qₙ) **durch** Leistungsmessung netzseitig der Anzapfung.

22. Verfahren nach Anspruch 18,
**gekennzeichnet durch**
Bestimmen der in das Stromnetz (9) abgegebenen Blindleistung (Qₙ) **durch** Messung der von dem Generator (2) abgegebenen Leistung (Q_{g}) sowie des Eigenverbrauchs (Qₑ) und Berechnen deren Differenz.

23. Verfahren nach einem der Ansprüche 18 bis 22,
**gekennzeichnet durch**
Bestimmen des Eigenverbrauchs (Pₑ, Qₑ), Bestimmen eines Korrektursignals für die von dem Generator (2) erzeugte Wirkleistung (P_{g}) aus dem Eigenverbrauch (Pₑ, Qₑ) mittels eines tiefpaßartigen Filters (44, 45) und Zuführen des Korrektursignals an das Wirkleistungsregelmodul (40).

24. Verfahren nach Anspruch 23,
**gekennzeichnet durch**
Detektieren eines Grenzlastbetriebs, bei dem die Windenergieanlage mit ihrer Nennleistung oder oberhalb einer von außen vorgebbaren reduzierten Schwellleistung betrieben wird, und Durchführen des Bestimmens des Korrektursignals nur im Grenzlastbetrieb.

## Claims

1. Wind energy installation having a rotor (11), a generator (2) which is driven by the rotor (11) and has an inverter (3) for production of electrical power (P_{g}, Q_{g}) on a main line (5) which is connected to the inverter (3) and to an electricity network (9), in order to feed electrical power (Pₙ, Qₙ) into the electricity network (9), a tapping device (7) on the main line (5) for the own consumption (Pₑ, Qₑ) of the wind energy installation via a secondary line (6), with the own consumption being the electrical power which is required for operation of the wind energy installation, and having a control device (4) with a power and wattless-component control module (40, 42),
**characterized in that**
a first power measurement device (81) is provided for the power (Pg) which is produced by the generator (2), and is connected to a controlled variable connection (41) of the power control module (40), with the power control module (40) controlling the power (Pg) which is produced by the generator (2), and
a second power measurement device (82) is provided for the wattless component (Qₙ) fed into the electricity network (9), and is connected to a controlled variable connection (43) of the wattless-component control module (42), with the wattless-component control module (42) controlling the wattless component (Qₙ) fed into the electricity network.

2. Wind energy installation according to Claim 1,
**characterized in that**
the first and the second power measurement devices (81, 82) are designed to detect the generator-side and network-side power in the main line (5).

3. Wind energy installation according to Claim 1,
**characterized in that**
the first power measurement device (81) for detection of the generator-side power (Pg) is arranged in the main line (5), and the second power measurement device (82') for detection of the wattless component (Qₑ) of the own supply is arranged in the secondary line (6).

4. Wind energy installation according to Claim 1,
**characterized in that**
the first power measurement device (81') for detection of the power (Pₑ) of the own supply is arranged in the secondary line (6), and the second power measurement device (82) for detection of the network-side wattless component (Qₙ) is arranged in the main line (5).

5. Wind energy installation according to one of the preceding claims,
**characterized in that**
the second power measurement device (82') is arranged on the high-voltage side of a transformer (55), which is arranged between the tapping device (7) and the electricity network (9), in order to produce a higher output voltage.

6. Wind energy installation according to Claim 5,
**characterized in that**
the output voltage is a medium voltage.

7. Wind energy installation according to Claim 5,
**characterized in that**
the output voltage is a high voltage.

8. Wind energy installation according to one of Claims 5 to 7,
**characterized in that**
a three-winding transformer is provided as the transformer (55').

9. Wind energy installation according to Claim 8,
**characterized in that**
a third power measurement device (83) is provided, in such a way that one power measurement device is arranged on each of the two primary windings of the three-winding transformer.

10. Wind energy installation according to one of the preceding claims,
**characterized in that**
the generator (2) is a synchronous generator.

11. Wind energy installation according to Claim 10,
**characterized in that**
the synchronous generator has one or more field windings and/or permanent-magnet excitation.

12. Wind energy installation according to one of the preceding claims,
**characterized in that**
the inverter (3) and the generator (2) are double-fed.

13. Wind energy installation according to one of Claims 1 to 9,
**characterized in that**
the generator (2) is a direct-current generator.

14. Wind energy installation according to one of the preceding claims,
**characterized in that**
a transmission (15) is arranged between the rotor (11) and the generator (2).

15. Wind energy installation according to one of the preceding claims,
**characterized in that**
an additional control device (45) is provided to which, as the controlled variable, the measured signal of the power of the own consumption (Pₑ) is applied via a low-pass filter (44), and the correction signal emitted from it is supplied to the power control module (40).

16. Wind energy installation according to Claim 15,
**characterized in that**
the additional control device can be connected and disconnected via a limit load switch, with the limit load switch closing when the wind energy installation is being operated at its rating or at a reduced threshold power which can be externally predetermined, and opening when the power emitted from the wind energy installation is below this.

17. Wind energy installation according to Claim 16,
**characterized in that**
the limit load switch has a control input for setting the threshold power.

18. Method for operation of a wind energy installation which has a rotor (11), a generator (2) driven by the rotor (11) and an inverter (3) for production of electrical power, with the electrical power being fed into an electricity network (9) via a main line (5) and with a tap (7) being provided on the main line (5) in order to supply the own consumption (Pₑ, Qₑ) to the wind energy installation via a secondary line (6), with the own consumption (Pₑ, Qₑ) being the electrical power which is required for operation of the wind energy installation, and with the power and wattless component being controlled by a control device (4) with a power and wattless-component module (40, 42),
**characterized in that**
the power (Pg) emitted from the generator (2) is determined and is used as a controlled variable for the power control module (40), with the power control module (40) controlling the power (Pg) produced by the generator (2), and
the wattless component (Qₙ) emitted to the network (9) is determined and is used as a controlled variable for the wattless-component control module (42), with the wattless-component control module (42) controlling the wattless component (Qₙ) fed into the electricity network (9).

19. Method according to Claim 18,
**characterized by**
determination of the power (Pg) emitted from the generator (2) by means of power measurement (81) on the generator side of the tap (7).

20. Method according to Claim 18,
**characterized by**
determination of the power (Pg) emitted from the generator (2) by a power measurement of the power (Pₙ, Qₙ) emitted to the electricity network (9) and of the own consumption (Pₑ, Qₑ), and calculation of the difference between them.

21. Method according to Claim 19 or 20,
**characterized by**
determination of the wattless component (Qₙ) emitted to the electricity network (9) by a power measurement on the network side of the tap.

22. Method according to Claim 18,
**characterized by**
determination of the wattless component (Qₙ) emitted to the electricity network (9) by measurement of the wattless-component (Q_{g}) emitted from the generator (2) and of the own consumption (Qₑ), and calculation of the difference between them.

23. Method according to one of Claims 18 to 22,
**characterized by**
determination of the own consumption (Pₑ, Qₑ), determination of a correction signal for the power (Pg) produced by the generator (2) from the own consumption (Pₑ, Qₑ) by means of a low-pass filter (44, 45), and supply of the correction signal to the power control module (40).

24. Method according to Claim 23,
**characterized by**
detection of a limit load operation, in which the wind energy installation is being operated at its rating or above a reduced threshold power which can be externally predetermined, and with the correction signal being determined only during limit load operation.

## Revendications

1. Centrale éolienne, comportant un rotor (11), un générateur (2) actionné par ce dernier, un onduleur (3) destiné à générer la puissance électrique (Pg, Q_{g}) d'une ligne principale (5), qui est reliée à l'onduleur (3) et à un réseau électrique (9) pour injecter la puissance électrique (Pₙ, Qₙ) dans le réseau électrique (9), un dispositif de branchement (7) sur la ligne principale (5) pour la consommation autonome (Pₑ, Qₑ) de la centrale éolienne via une ligne secondaire (6), la consommation autonome étant la puissance électrique nécessaire pour le fonctionnement de la centrale éolienne, et un dispositif de commande (4) avec un module de réglage de la puissance active et de la puissance réactive (40, 42),
**caractérisée en ce que**
un premier dispositif de mesure de puissance (81) pour la puissance active (Pg) produite par le générateur (2) est prévu et est relié à un raccord de grandeur de réglage (41) du module de réglage de la puissance active (40), ledit module de réglage de la puissance active (40) régulant la puissance active (Pg) produite par le générateur (2), et
un deuxième dispositif de mesure de puissance (82) pour la puissance réactive (Qₙ) injectée dans le réseau électrique (9) est prévu et est relié à un raccord de grandeur de réglage (43) du module de réglage de la puissance réactive (42), ledit module de réglage de la puissance réactive (42) régulant la puissance réactive (Qₙ) injectée dans le réseau électrique.

2. Centrale éolienne selon la revendication 1, **caractérisée en ce que** le premier et le deuxième dispositif de mesure de puissance (81, 82) sont réalisés pour détecter la puissance du côté générateur et la puissance du côté réseau dans la ligne principale (5).

3. Centrale éolienne selon la revendication 1, **caractérisée en ce que** le premier dispositif de mesure de puissance (81), destiné à détecter la puissance active (Pg) du côté du générateur, est monté dans la ligne principale (5), et le deuxième dispositif de mesure de puissance (82'), destiné à détecter la puissance réactive (Qₑ) de la consommation autonome, est monté dans la ligne secondaire (6).

4. Centrale éolienne selon la revendication 1, **caractérisée en ce que** le premier dispositif de mesure de puissance (81'), destiné à détecter la puissance active (Pₑ) de la consommation autonome est monté dans la ligne secondaire (6) et le deuxième dispositif de mesure de puissance (82), destiné à détecter la puissance réactive (Qₙ) du côté du réseau, est monté dans la ligne principale (5).

5. Centrale éolienne selon l'une quelconque des revendications précédentes, **caractérisée en ce que** le deuxième dispositif de mesure de puissance (82') est monté sur le côté haute tension d'un transformateur (55), disposé entre le dispositif de branchement (7) et le réseau électrique (9) et destiné à générer une tension de sortie plus élevée.

6. Centrale éolienne selon la revendication 5, **caractérisée en ce que** la tension de sortie est une moyenne tension.

7. Centrale éolienne selon la revendication 5, **caractérisée en ce que** la tension de sortie est une haute tension.

8. Centrale éolienne selon l'une quelconque des revendications 5 à 7, **caractérisée en ce que** pour le transformateur (55') il est prévu un transformateur à trois enroulements.

9. Centrale éolienne selon la revendication 8, **caractérisée en ce qu'**il est prévu un troisième dispositif de mesure de puissance (83), de telle sorte que respectivement un dispositif de mesure de puissance est disposé au niveau des deux enroulements primaires du transformateur à trois enroulements.

10. Centrale éolienne selon l'une quelconque des revendications précédentes, **caractérisée en ce que** le générateur (2) est réalisé sous la forme d'un générateur synchrone.

11. Centrale éolienne selon la revendication 10, **caractérisée en ce que** le générateur synchrone comporte un ou plusieurs enroulements inducteurs et/ou une excitation permanente.

12. Centrale éolienne selon l'une quelconque des revendications précédentes, **caractérisée en ce que** l'onduleur (3) et le générateur (2) sont réalisés avec une double alimentation.

13. Centrale éolienne selon l'une quelconque des revendications 1 à 9, **caractérisée en ce que** le générateur (2) est un générateur à courant continu.

14. Centrale éolienne selon l'une quelconque des revendications précédentes, **caractérisée en ce qu'**un engrenage (15) est monté entre le rotor (11) et le générateur (2).

15. Centrale éolienne selon l'une quelconque des revendications précédentes, **caractérisée en ce qu'**il est prévu un dispositif de réglage supplémentaire (45), vers lequel est transmis en tant que grandeur de réglage le signal mesuré de la puissance active (Pₑ) de la consommation autonome par l'intermédiaire d'un filtre (44) de type passe-bas et le signal de correction délivré par ledit dispositif de réglage est acheminé vers le module de réglage de la puissance active (40).

16. Centrale éolienne selon la revendication 15, **caractérisée en ce que** le dispositif de réglage supplémentaire peut être connecté et déconnecté par l'intermédiaire d'un commutateur de limitation de charge, ledit commutateur de limitation de charge fermant lorsque la centrale éolienne fonctionne avec sa puissance nominale ou avec une puissance seuil réduite, pouvant être prédéfinie de l'extérieur, et ouvre lorsque la puissance délivrée par la centrale éolienne est inférieure à ladite puissance.

17. Centrale éolienne selon la revendication 16, **caractérisée en ce que** le commutateur de limitation de charge comporte une entrée de commande pour le réglage de la puissance seuil.

18. Procédé de fonctionnement d'une centrale éolienne, qui comporte un rotor (11), un générateur (2) actionné par ce dernier, et un onduleur (3) destiné à générer la puissance électrique, avec une injection de la puissance électrique dans un réseau électrique (9) via une ligne principale (5), et un branchement (7) de la ligne principale (5) pour alimenter la centrale éolienne en vue de sa consommation autonome (Pₑ, Qₑ) via une ligne secondaire (6), la consommation autonome (Pₑ, Qₑ) étant la puissance électrique nécessaire pour le fonctionnement de la centrale éolienne, et la puissance active et la puissance réactive étant régulées par un dispositif de commande (4) avec un module de réglage de la puissance active et de la puissance réactive (40, 42),
**caractérisé en ce que**
la puissance active (Pg) délivrée par le générateur (2) est déterminée et est utilisée en tant que grandeur de réglage pour le module de réglage de la puissance active (40), ledit module de réglage de la puissance active (40) régulant la puissance active (Pg) produite par le générateur (2), et
la puissance réactive (Qₙ) délivrée vers le réseau (9) est déterminée et est utilisée en tant que grandeur de réglage pour le module de réglage de la puissance réactive (42), ledit module de réglage de la puissance réactive (42) régulant la puissance réactive (Qₙ) injectée dans le réseau électrique (9).

19. Procédé selon la revendication 18, **caractérisé par** la détermination de la puissance active (Pg), délivrée par le générateur (2), au moyen de la mesure (81) de la puissance du côté générateur du branchement (7).

20. Procédé selon la revendication 18, **caractérisé par** la détermination de la puissance active (Pg), délivrée par le générateur (2), au moyen de la mesure de la puissance (Pₙ, Qₙ) délivrée vers le réseau électrique (9), ainsi que de la consommation autonome (Pₑ, Qₑ) et calcul de la différence entre celles-ci.

21. Procédé selon la revendication 19 ou 20, **caractérisé par** la détermination de la puissance réactive (Qₙ), délivrée vers le réseau électrique (9), au moyen de la mesure de la puissance du côté réseau du branchement.

22. Procédé selon la revendication 18, **caractérisé par** la détermination de la puissance réactive (Qₙ), délivrée vers le réseau électrique (9), au moyen de la mesure de la puissance (Q_{g}) délivrée par le générateur (2), ainsi que de la consommation autonome (Qₑ) et calcul de la différence entre celles-ci.

23. Procédé selon l'une quelconque des revendications 18 à 22, **caractérisé par** la détermination de la consommation autonome (Pₑ, Qₑ), la détermination d'un signal de correction pour la puissance active (Pg) produite par le générateur (2) à partir de la consommation autonome (Pₑ, Qₑ) au moyen d'un filtre (44, 45) de type passe-bas et acheminement du signal de correction vers le module de réglage de la puissance active (40).

24. Procédé selon la revendication 23, **caractérisé par** la détection d'un fonctionnement en charge limite, dans lequel la centrale éolienne est exploitée avec sa puissance nominale ou au-dessus d'une puissance seuil réduite, pouvant être prédéfinie de l'extérieur, et mise en oeuvre de la détermination du signal de correction uniquement au cours du fonctionnement en charge limite.
